# EUROPÄISCHE PATENTSCHRIFT

(11) **EP 2 162 312 B1**
(45) Veröffentlichungstag und Bekanntmachung des Hinweises auf die Patenterteilung: **24.08.2011**
(21) Anmeldenummer: 08749979.4
(22) Anmeldetag: 02.05.2008
(51) Int. Cl.: B60K 35/00, B60K 37/00

(54) **KOMBIINSTRUMENT**
COMBINATION INSTRUMENT
INSTRUMENT COMBINÉ

(30) Priorität: 16.05.2007 DE 102007023066
(43) Veröffentlichungstag der Anmeldung: 17.03.2010
(73) Patentinhaber: Continental Automotive GmbH, 30165 Hannover (DE)
(72) Erfinder: DÖBLER, Michael, 63500 Seligenstadt (DE); WEBER, Markus, 55129 Mainz (DE); LEHNERT, Peter, 82266 Inning Am Ammersee (DE); MÜLLER, Joachim, 63073 Offenbach (DE); PAWUSCH, Wolfgang-Peter, 65239 Hochheim (DE); RADOJKOVIC, Peter, 81241 München (DE)
(86) Internationale Anmeldenummer: PCT/EP2008/055407
(87) Internationale Veröffentlichungsnummer: WO 2008/138774

(56) Entgegenhaltungen:
- EP-A- 0 807 842
- WO-A-98/28649
- WO-A-2005/035299
- DE-A1- 3 025 346
- DE-A1- 10 239 828
- GB-A- 2 405 516
- US-A1- 2004 027 041

## Beschreibung

Die Erfindung betrifft ein Kombiinstrument, das beispielsweise in einem Kraftfahrzeug eingesetzt werden kann.

Derartige Kombiinstrumente werden eingesetzt zum Anzeigen der Geschwindigkeit und/oder der Drehzahl eines Fahrzeugs. Neben dieser Funktion sind sie auch häufig ausgebildet zum Anzeigen verschiedener Betriebszustände des Fahrzeugs. So umfassen sie häufig eine Anschnallsignalisierung, eine Handbremszustandsdarstellung, eine Airbagskontrollanzeige, eine ABS- oder EPS-Funktionsanzeige oder auch eine Kontrollanzeige oder eine Fernlicht- oder Abblendlichtsignalisierung und/oder eine Blinkanzeige und/oder eine Ganganzeige oder eine Schaltstellungsanzeige einer automatischen Getriebesteuerung. Daneben können regelmäßig weitere Informationen auf dem Kombiinstrument dargestellt werden. Derartige Informationen können beispielsweise eine Tankreichweite umfassen, einen aktuellen oder durchschnittlichen Kraftstoffverbrauch, einen Tageskilometerzähler oder einen sonstigen Kilometerzähler oder weitere Informationen, die bevorzugt in einer Recheneinheit aufbereitet werden und über eine Anzeigeeinheit, die in dem Kombiinstrument angeordnet ist, optisch ausgegeben werden. Die Anzeigeeinheit kann beispielsweise als ein kleiner Flachbildschirm und so insbesondere als ein LCD ausgebildet sein. Ein kombiinstrument ist z.B. aus Dokument US 2004/0027041A1 bekannt.

Die Aufgabe, die der Erfindung zugrunde liegt, ist es, ein Kombiinstrument zu schaffen mit einer optischen Anzeigeeinheit, bei dem von der optischen Anzeigeeinheit im Wesentlichen lediglich die mittels der optischen Anzeigeeinheit dargestellten Informationen, nicht jedoch die Anzeigeeinheit selbst, sichtbar sind.

Die Aufgabe wird gelöst durch die Merkmale des unabhängigen Patentanspruchs. Vorteilhafte Weiterbildungen der Erfindung sind in den Unteransprüchen gekennzeichnet.

Die Erfindung zeichnet sich aus durch ein Kombiinstrument mit einer für Licht im sichtbaren Bereich transparenten Scheibe, Ziffernblattbereich und einem Anzeigebereich. Auf einer Rückseite der transparenten Scheibe ist in dem Ziffernblattbereich ein Ziffernblattdruck aufgebracht. Eine Polfilterscheibe ist vorgesehen, die auf der Rückseite der transparenten Scheibe fluchtend zu dem Anzeigebereich angeordnet ist und die einen Zirkular-Polfilter umfasst. Eine optische Anzeigeeinheit ist in der Flucht des Anzeigebereichs rückseitig zu der transparenten Scheibe und der Polfilterscheibe angeordnet. Durch die Polfilterscheibe wird sehr wirkungsvoll sichergestellt, dass sehr wenig Umgebungslicht zu der optischen Anzeigeeinheit vordringt und ferner, dass das von der optischen Anzeigeeinheit reflektierte Licht zu einem sehr hohen Grad ausgelöscht wird. Das von der optischen Anzeigeeinheit insbesondere polarisiert, emittierte Licht wird jedoch in einem weit höheren Maße durch die Polfilterscheibe transmittiert mit der Folge, dass im Wesentlichen lediglich die mittels der optischen Anzeigeeinheit dargestellten Informationen nicht jedoch die Anzeigeeinheit selbst sichtbar sind. Darüber hinaus hat das Kombiinstrument durch das Vorsehen der transparenten Scheibe sowohl für den Ziffernblattbereich als auch den Anzeigebereich eine homogene und damit ansprechende Oberfläche.

Gemäß einer vorteilhaften Ausgestaltung umfasst das Kombiinstrument eine Filterscheibe, die zwischen der transparenten Scheibe und der Polfilterscheibe fluchtend zu dem Anzeigebereich angeordnet ist. Die Filterscheibe ist grau eingefärbt. Auf diese Weise kann eine geeignet geringe Transmission des Umgebungslichts hin zu der optischen Anzeigeeinheit weiter verringert werden. Dies trägt dann weiter dazu bei, dass die optische Anzeigeeinheit im Wesentlichen selbst nicht sichtbar ist.

In diesem Zusammenhang ist es besonders vorteilhaft, wenn die Filterscheibe derart ausgebildet ist, dass sie einen Transmissionsgrad von 50 bis 20 %, besonders vorteilhaft von etwa 25 % hat. Auf diese Weise kann dann besonders wirkungsvoll sichergestellt werden, dass die Anzeigeeinheit selbst nicht sichtbar ist.

Gemäß einer weiteren vorteilhaften Ausgestaltung der Erfindung weist die transparente Scheibe auf einer Vorderseite, die der Rückseite abgewandt ist, eine Entspiegelungsschicht auf, die als matte Hartklarlackschicht ausgebildet ist. Auf diese Weise können unerwünschte Reflexe besonders wirkungsvoll vermieden werden.

Gemäß einer weiteren vorteilhaften Ausgestaltung umfassen die transparente Scheibe und die Filterscheibe Polycarbonat. Auf diese Weise kann eine besonders hohe Temperaturstabilität des Kombiinstruments sichergestellt werden. Aufgrund des nahezu gleichen thermischen Ausdehnungsverhaltens oder gleichen thermischen Ausdehnungsverhaltens der transparenten Scheibe und der Filterscheibe. Dadurch kann eine gleichmäßige Belastung einer Klebeschicht zwischen der transparenten Scheibe und der Filterscheibe gewährleistet werden.

Gemäß einer weiteren vorteilhaften Ausgestaltung umfasst die Polfilterscheibe Polyvinylalkohol.Dadurch kann ein besonders wirkungsvoller Polfilter realisiert sein.

Ausführungsbeispiele der Erfindung sind im Folgenden anhand der schematischen Zeichnungen näher erläutert. Es zeigen:
- Figur 1: eine Draufsicht auf ein Kombiinstrument und

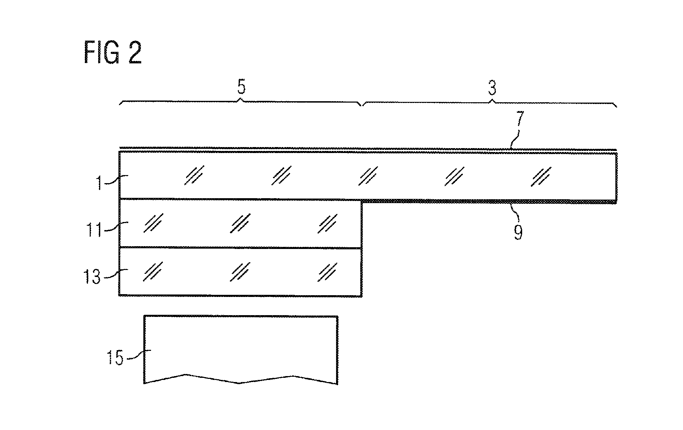

- Figur 2: einen Querschnitt durch einen Teil des Kombiinstrumentes.

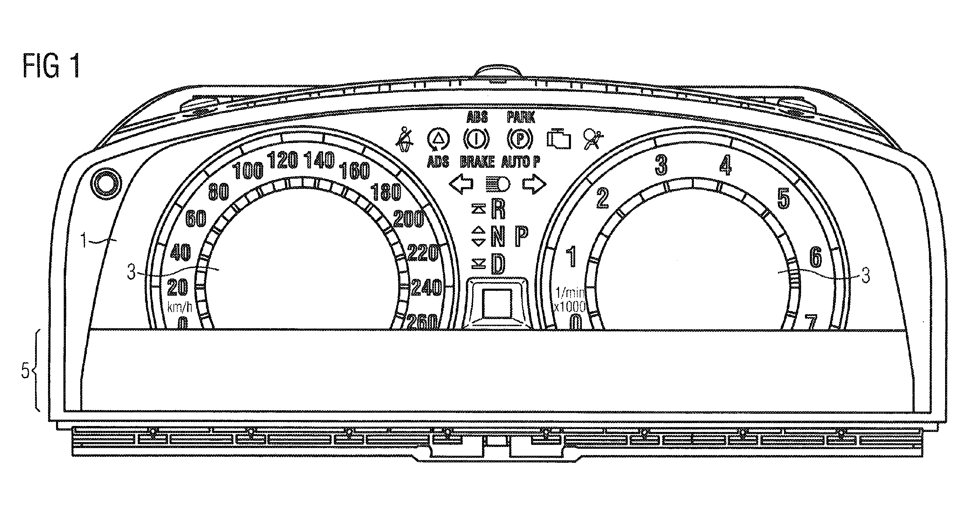

Ein Kombiinstrument (Figur 1), das beispielsweise in einem Kraftfahrzeug eingesetzt werden kann, ist ausgebildet zum Anzeigen verschiedener Betriebszustandsinformationen des Kraftfahrzeugs. So umfasst es eine Geschwindigkeitsanzeige und/oder eine Drehzahlanzeige.

Das Kombiinstrument weist auf seiner dem Fahrer zugewandten Seite eine transparente Scheibe 1 für Licht im sichtbaren Bereich auf, die einen Ziffernblattbereich 3 und einen Anzeigebereich 5 aufweist. Auf der dem Fahrer, also dem Betrachter, zugewandten Seite der transparenten Scheibe 1 ist bevorzugt eine Entspiegelungsschicht 7 aufgebracht. Die Entspiegelungsschicht ist bevorzugt mattiert und weist bevorzugt eine Antireflexbeschichtung auf. Die Entspiegelungsschicht 7 ist bevorzugt aus Hartklarlack ausgebildet, der zusätzlich einen mechanischen Schutz für das Kombiinstrument bietet. Der Hartklarlack hat eine Vielzahl an Mikrounebenheiten, die auch als Mikrohügel bezeichnet werden können, und bewirkt so sein mattiertes Erscheinungsbild. Die Oberfläche ist somit diffus rau. Auf der Rückseite der transparenten Scheibe 1, also der der Vorderseite abgewandten Seite der transparenten Scheibe 1, ist in dem Ziffernblattbereich 3 ein rückseitiger Ziffernblattdruck 9 aufgebracht. Der Ziffernblattdruck ist bevorzugt im Wesentlichen schwarz und somit lichtundurchlässig. Bevorzugt werden auch Skalen und Rasterdrucke in diesem Bereich ausgebildet.

In dem Anzeigebereich 5 ist fluchtend mit diesem auf der Rückseite der transparenten Scheibe 1 eine Filterscheibe 11 angeordnet, die grau eingefärbt ist. Die Dicke und der Grad der Einmischung von Dunkeltönen ist derart vorgegeben, dass ein Transmissionsgrad von Licht durch die Filterscheibe einen vorgegebenen Wert einnimmt. Die Filterscheibe ist in diesem Zusammenhang bevorzugt so ausgebildet, dass sie einen Transmissionsgrad für Licht im sichtbaren Bereich von etwa 50 bis 20 % hat. Es hat sich gezeigt, dass ein Transmissionsgrad von in etwa 25 % besonders vorteilhaft ist.

Auf der der transparenten Scheibe 7 abgewandten Seite der Filterscheibe 11 ist eine Polfilterscheibe 13 angeordnet. Die Polfilterscheibe ist ebenfalls fluchtend zu dem Anzeigebereich 5 bezüglich der transparenten Scheibe 1 angeordnet. Sie umfasst einen Zirkular-Polfilter.

Ebenfalls fluchtend zu dem Anzeigebereich der transparenten Scheibe 1 ist auf der der transparenten Scheibe 1 abgewandten Seite der Polfilterscheibe 13 eine optische Anzeigeeinheit angeordnet. Sie ist mit einem vorgegebenen Abstand zu der Polfilterscheibe 13 angeordnet. Die optische Anzeigeeinheit kann beispielsweise als Flachbildschirm ausgebildet sein und kann beispielsweise ein LCD sein oder ein TFT. Bevorzugt strahlt die Anzeigeeinheit 15 polarisiertes Licht ab. Dazu kann sie einen Polarisationsfilter umfassen, der das von der Anzeigeeinheit emittierte Licht beispielsweise linear oder zirkular polarisiert, bevorzugt zirkular polarisiert.

Der Polfilter ist dazu ausgebildet, das auf ihn eintreffende Licht zirkular zu polarisieren, so dass das zirkular polarisierte Licht zwei aufeinander senkrecht stehende Schwingungskomponenten aufweist, deren Ausbreitungsrichtung senkrecht zu einer Scheibenebene der Polfilterscheibe 13 ist. Es breitet sich somit entweder auf die Anzeigeeinheit 15 hin gerichtet oder dementsprechend umgekehrt hin gerichtet zu der transparenten Scheibe 1 aus. Dieser Effekt kommt besonders gut bei spiegelnden Flächen zur Geltung, da hier die Polarisierung beibehalten wird. Insbesondere ein Rahmen der Anzeigeeinheit 15 ist häufig als spiegelnde Fläche ausgebildet.

Durch die Polfilterscheibe 13 wird zum einen sichergestellt, dass nur ein geringer Anteil des von der Vorderseite der transparenten Scheibe 1 her eindringenden Umgebungslichts transmittiert wird und von demjenigen Anteil, der dann zirkular polarisiert in Richtung zu der Anzeigeeinheit transmittiert wird und an dieser reflektiert wird, ein hoher Anteil durch die sich durch die Reflexion ergebende Phasenverschiebung ausgelöscht wird. Dies hat zur Folge, dass aus Sicht des Betrachters die Anzeigeeinheit 15, so lange sie selbst kein Licht emittiert, weitgehend unsichtbar ist.

Das von der Anzeigeeinheit 15 emittierte Licht hingegen kann durch geeignete Ausrichtung der Polfilterscheibe 13 relativ ungehindert durch das Polfilter hindurchstrahlen und somit dann bei geeigneter Wahl der Lichtstärke auch mit einer vorgegebenen, für eine gute Sichtbarkeit notwendigen Lichtstärke aus der transparenten Scheibe 1 austreten und somit für den Betrachter gut sichtbar sein.

Bevorzugt sind die transparente Scheibe, die Filterscheibe 11 und die Polfilterscheibe 13 durch Laminieren miteinander gekoppelt. Besonders vorteilhaft ist es, wenn die Polfilterscheibe 13 und die Filterscheibe 11 als eine Einheit, also insbesondere bereits laminiert, mit der transparenten Scheibe 1 laminiert werden.

Eine besonders gute Temperaturstabilität ergibt sich, wenn die einzelnen Scheiben, also die transparente Scheibe 1, die Filterscheibe 11 und auch die Polfilterscheibe 13, alle Polycarbonat umfassen. Die Scheiben sind insbesondere folienförmig ausgebildet.

Durch das Vorsehen der transparenten Scheibe 1 und der Polfilterscheibe 13 und auch bevorzugt der Filterscheibe 11 kann ein sehr homogener Flächeneindruck für den Betrachter in Bezug auf den Ziffernblattbereich 3 und den Anzeigebereich 3 gewährleistet werden und somit hohen Designanforderungen Rechnung getragen werden.

## Patentansprüche

1. Kombiinstrument mit
- einer für Licht im sichtbaren Bereich transparenten Scheibe (1) mit einem Ziffernblattbereich (3) und einem Anzeigebereich (5),
- einem Ziffernblattdruck (9), der in dem Ziffernblattbereich (3) auf einer Rückseite der transparenten Scheibe (1) aufgebracht ist,
- einer Polfilterscheibe (13), die auf der Rückseite der transparenten Scheibe (1) fluchtend zu dem Anzeigebereich (5) angeordnet ist und die einen Zirkular-Polfilter umfasst, und
- einer optischen Anzeigeeinheit (15), die in der Flucht des Anzeigebereichs (5) rückseitig zu der transparenten Scheibe (1) und der Polfilterscheibe (13) angeordnet ist.

2. Kombiinstrument nach Anspruch 1,
bei dem
- eine Filterscheibe (11) zwischen der transparenten Scheibe (1) und der Polfilterscheibe (13) fluchtend zu dem Anzeigebereich (5) angeordnet ist und die Filterscheibe (11) grau eingefärbt ist.

3. Kombiinstrument nach Anspruch 2,
bei dem die Filterscheibe (11) derart ausgebildet ist, dass sie einen Transmissionsgrad für sichtbares Licht von 50 bis 20 % hat.

4. Kombiinstrument nach Anspruch 3, bei dem die Filterscheibe (11) derart ausgebildet ist, dass sie einen Transmissionsgrad für sichtbares Licht von 25 % hat.

5. Kombiinstrument nach einem der vorstehenden Ansprüche, bei dem die transparente Scheibe (1) auf einer Vorderseite, die der Rückseite abgewandt ist, eine Entspiegelungsschicht (7) aufweist.

6. Kombiinstrument nach Anspruch 5, bei dem die Entspiegelungsschicht (7) als matte Hartklarlackschicht ausgebildet ist.

7. Kombiinstrument nach einem der Ansprüche 2 bis 6, bei dem die transparente Scheibe (1) und die Filterscheibe (11) Polycarbonat umfassen.

8. Kombiinstrument nach einem der vorstehenden Ansprüche, bei dem die Polfilterscheibe (13) Polyvinylalkohol umfasst.

## Claims

1. Combination instrument having
- a disk (1) which is transparent to light in the visible range and has a dial region (3) and an indicator region (5),
- a dial imprint (9) which is applied to the back of the transparent disk (1) in the dial region (3),
- a polarizing filter disk (13) which is arranged on the back of the transparent disk (1) flush with the indicator region (5) and comprises a circular polarizing filter, and
- a visual indicator unit (15) which is arranged flush with the indicator region (5), on the back of the transparent disk (1) and of the polarizing filter disk (13).

2. Combination instrument according to Claim 1,
in which
- a filter disk (11) is arranged between the transparent disk (1) and the polarizing filter disk (13), flush with the indicator region (5), and the filter disk (11) is colored gray.

3. Combination instrument according to Claim 2,
in which the filter disk (11) is embodied in such a way that it has a transmission factor for visible light of 50 to 20%.

4. Combination instrument according to Claim 3,
in which the filter disk (11) is embodied in such a way that it has a transmission factor for visible light of 25%.

5. Combination instrument according to one of the preceding claims,
in which the transparent disk (1) has a demirrored layer (7) on a front side facing away from the back.

6. Combination instrument according to Claim 5,
in which the demirrored layer (7) is embodied as a matt hard clear varnish layer.

7. Combination instrument according to one of Claims 2 to 6, in which the transparent disk (1) and the filter disk (11) comprise polycarbonate.

8. Combination instrument according to one of the preceding claims,
in which the polarizing filter disk (13) comprises polyvinyl alcohol.

## Revendications

1. Instrument combiné comprenant
- une vitre (1) transparente à la lumière du domaine visible, comprenant une zone (3) de cadran et une zone (5) d'affichage,
- une impression (9) de cadran, qui est apposée dans la zone (3) de cadran sur une face arrière de la vitre (1) transparente,
- un disque (13) de filtre polaire, qui est disposé sur la face arrière de la vitre (1) transparente en alignement avec la zone (5) d'affichage et qui comprend un filtre polaire circulaire, et
- une unité (15) optique d'affichage, qui est disposée dans l'alignement de la zone (5) d'affichage du côté arrière par rapport à la vitre (1) transparente et au disque (13) de filtre polaire.

2. Instrument combiné suivant la revendication 1,
dans lequel
- un disque (11) filtrant est disposé entre la vitre (1) transparente et le disque (13) de filtre polaire en alignement avec la zone (5) d'affichage et le disque (11) filtrant est coloré en gris.

3. Instrument combiné suivant la revendication 2,
dans lequel le disque (11) filtrant est tel qu'il a un degré de transmission de la lumière visible de 50 à 20 %.

4. Instrument combiné suivant la revendication 3,
dans lequel le disque (11) filtrant est tel qu'il a un degré de transmission de la lumière visible de 25 %.

5. Instrument combiné suivant l'une des revendications précédentes,
dans lequel la vitre (1) transparente a sur une face avant qui est opposée à la face arrière une couche (7) antireflet.

6. Instrument combiné suivant la revendication 5,
dans lequel la couche (7) antireflet est constituée sous la forme d'une couche mate en vernis limpide dur.

7. Instrument combiné suivant l'une des revendications 2 à 6,
dans lequel la vitre (1) transparente et le disque (11) filtrant comprennent du polycarbonate.

8. Instrument combiné suivant l'une des revendications précédentes,
dans lequel le disque (13) de filtre polaire comprend de l'alcool polyvinylique.
